Europäisches Patentamt

European Patent Office

Office européen des brevets

(11) Publication number: **0 063 466**
**B1**

(12) **EUROPEAN PATENT SPECIFICATION**

(45) Date of publication of patent specification: **11.03.87**

(51) Int. Cl.⁴: **G 05 D 3/20,** G 05 B 19/23

(21) Application number: **82301921.1**

(22) Date of filing: **14.04.82**

(54) Method for detecting a position of a moving body.

(30) Priority: **17.04.81 JP 55350/81**

(43) Date of publication of application:
**27.10.82 Bulletin 82/43**

(45) Publication of the grant of the patent:
**11.03.87 Bulletin 87/11**

(84) Designated Contracting States:
**DE FR GB**

(56) References cited:
**WO-A-81/00467**
**DE-A-2 020 072**
**DE-A-2 418 909**
**US-A-3 593 091**

(73) Proprietor: **TOYOTA JIDOSHA KABUSHIKI KAISHA**
**1, Toyota-cho Toyota-shi**
**Aichi-ken 471 (JP)**

(72) Inventor: **Kato, Yoshito**
**105-120, Aza-fujizuka Ohaza-Orido**
**Nisshincho Aichi-gun Aichi (JP)**
Inventor: **Matsubara, Hideyuki**
**1736-78, Senninzuka Zengocho**
**Toyoake Aichi (JP)**
Inventor: **Hashimoto, Toshio**
**32-141, Nomiyamacho 2-chome**
**Toyota Aichi (JP)**

(74) Representative: **Burnside, Michael et al**
**Michael Burnside & Partners 2 Serjeants' Inn**
**Fleet Street**
**London EC4Y 1HL (GB)**

## Description

The present invention relates to a method for detecting a position of a moving body, and more particularly to an improvement in a method for detecting a position of a moving body suitable for use in a machine tool to detect whether a relative position between a workpiece and a tool is at a predetermined position to switch a feed device.

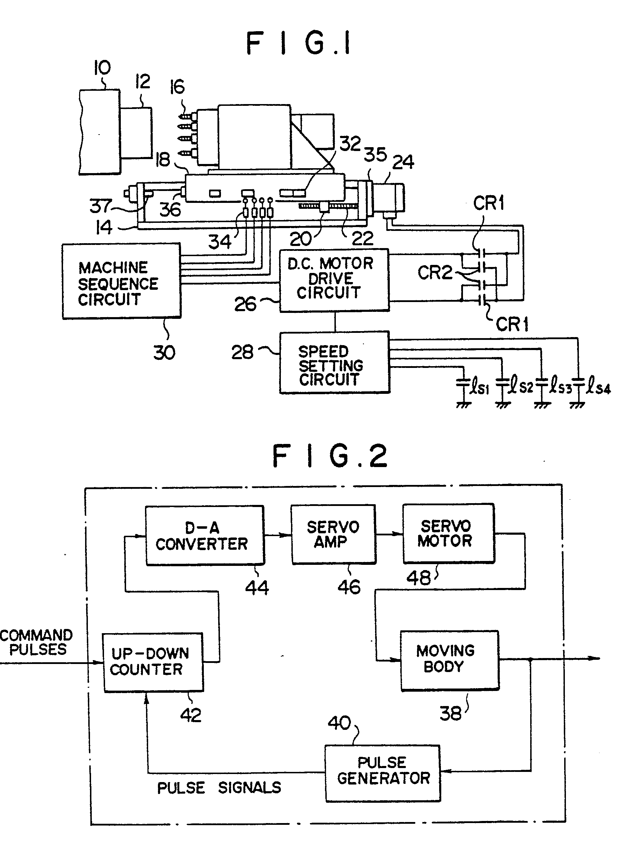

In a machine tool or an industrial machine, it is very important to precisely detect a position of a tool or the like in order to control a feed velocity of the tool in accordance with a relative position between a workpiece and the tool or a progress of a machining process. In a prior art machine tool shown in Fig. 1 which comprises a stationary slide base 14 for machining a workpiece 12 fixed on a jig 10, a slide table 18 for supporting a spindle 16 and movable back and forth on the slide base 14, a D.C. motor 24 for rotating a feed shaft 22 threadedly engaged with a feed nut 20 fixed to the bottom of the slide table 18 to advance or retract the slide table 18, a D.C. motor drive circuit 26 for controlling the direction of rotation and the rotating speed of the D.C. motor 24, a speed setting circuit 28 for setting an appropriate feed speed in accordance with an advanced position of the spindle 16 to the D.C. motor drive circuit 26, and a machine sequence circuit 30 for controlling the D.C. motor drive circuit 26, dogs 32 are arranged at predetermined positions on the side of the slide table 18 and mechanical limit switches 34 are arranged such that they are turned on and off by the dogs 32. Thus, by detecting the advanced position of the slide table 18 or the spindle 16 by turning on and off the limit switches 34 by the dogs 32, the D.C. motor drive circuit 26 is controlled through the machine sequence circuit 30 to control the feed of the slide table 18. In Fig. 1, numeral 35 denotes a bearing, numeral 36 denotes a stopper fixed on a front end of the slide table 18, numeral 37 denotes a dead stopper fixed to an inner wall of the slide base 14, CR1 and CR2 denote forward/reverse switching contacts for switching the direction of rotation of the D.C. motor 24, and $Is_1 \sim Is_4$ denote speed switching contacts for switching the feed speed depending on a status of machining process.

The position detector described above is very simple in structure and need only the mechanical limit switches 34 and the dogs 32 which are approximately equal in number to the number of signal outputs desired be arranged at the positions of control switching required. However, the mechanical limit switches are weak in mechanical strength and are not fully protected against environment of a plant site such as oil, water and dust. Therefore, they are apt to misoperate by particles, dust and cooling water and hence lack in reliability. Further, the relative positional relation between the limit switch and the dog is destroyed during an extended time period, and once it is destroyed the adjustment of the dog is troublesome. Although a problem is relatively small in a machine tool which machines workpieces of one kind by a single spindle, a machine tool which carries out a plurality of machining processes to workpieces of one or more kinds needs to change the positions of the dogs and the limit switches each time the workpiece or the spindle is changed. Accordingly, such a machine tool is not adapted for general purpose. The same problem is encountered when proximity switches are used instead of the limit switches.

On the other hand, many of modern numerically controlled machine tools employ digital servo mechanisms having a position feedback system. It comprises, as shown in Fig. 2, a pulse generator 40 for converting amount of movement of a moving body 38 such as a slide table directly or indirectly to digital pulse signals, an up-down counter for counting up and down the pulse signals from the output of the pulse generator 40 representing the position of the moving body 38 to produce a difference from preset command pulses, a digital-to-analog converter 44 for converting the output of the up-down counter 42 to an analog signal and a servo amplifier 46 for amplifying the output of the digital-to-analog converter 44 to supply an amplified output to a servo motor 48 for controlling the position of the moving body 38. With this digital servo mechanism, the position of the moving body 38 is monitored from time to time. Thus, under an ideal condition, highly precise feed control could be attained. In actual, however, the mechanism needs a large number of elements and complex construction and hence it is expensive. In addition, the reliability of the elements is low and a backlash of the transmission system is one of factors for unstabilizing the operation of the servo mechanism. Furthermore, in order to incorporate the servo mechanism having the position feedback system in the prior art machine tool, the machine tool must be modified considerably.

US—A—3,593,091 and DE—A—2,418,909 disclose methods for detecting a position of a moving body, including the steps of the preamble of Claim 1.

It is an object of the present invention to provide a method for detecting a position of a moving body without requiring less reliable mechanical limit switches or a complex servo mechanism, which method is very easy to commercially use in a machine tool and inexpensive to practice.

The invention provides a method for detecting a position of a moving body by converting unit amounts of movement of the moving body directly or indirectly to pulse signals comprising the steps of:

selecting one of a plurality of predetermined positions in a range of movement of said moving body as a reference position;

prestoring a reference number corresponding to said reference position and preset numbers corresponding to the other predetermined positions determined with reference to said reference number;

counting said pulse signals with reference to

3      **0 063 466**      4

said reference number from a time point of arrival of said moving body at said reference position; and

comparing the count of said pulse signals with said preset numbers, whereby the arrival of said moving body at said other predetermined positions is detected when a compare equal is detected in the comparison, characterized by the steps of:

checking the difference between said reference number and said count of said pulse signals when said moving body has arrived at said reference position;

resetting said count of said pulse signals to said reference number if said difference is within a predetermined allowable range; and

producing an error signal to display an error condition and stop said moving body if said difference is not within a predetermined allowable range.

Thus, in accordance with the present invention, the position of the moving body can be detected in a non-contact detection method with high precision for an extended period of time without using the mechanical limit switches. Since a complex servo system is not required, the mechanism is compact and inexpensive. Since switching points of control can be readily modified, the present method can be applicable to a variety of controls in the same facilities.

The above-mentioned objects and features of the present invention will become more apparent from the following description taken in conjunction with the accompanying drawings, in which like reference numerals denote like elements and in which:

Fig. 1 shows a block diagram of one configuration of a prior art feed control unit of a machine tool which uses mechanical limit switches,

Fig. 2 shows a block diagram of one configuration of a prior art servo mechanism having a position feedback system,

Fig. 3 shows a block diagram of a configuration of a feed control unit of a machine tool in accordance with one embodiment of the present invention,

Fig. 4 shows an output waveform of a linear encoder used in the embodiment of Fig. 3,

Fig. 5 shows a reference signal waveform of the output of the linear encoder,

Fig. 6 illustrates feed speed control of a slide table in the embodiment of Fig. 3,

Fig. 7 shows a flow chart for an operation of a limit detector in the embodiment of Fig. 3, and

Fig. 8 shows a block diagram of another embodiment of the present invention which uses a rotary encoder.

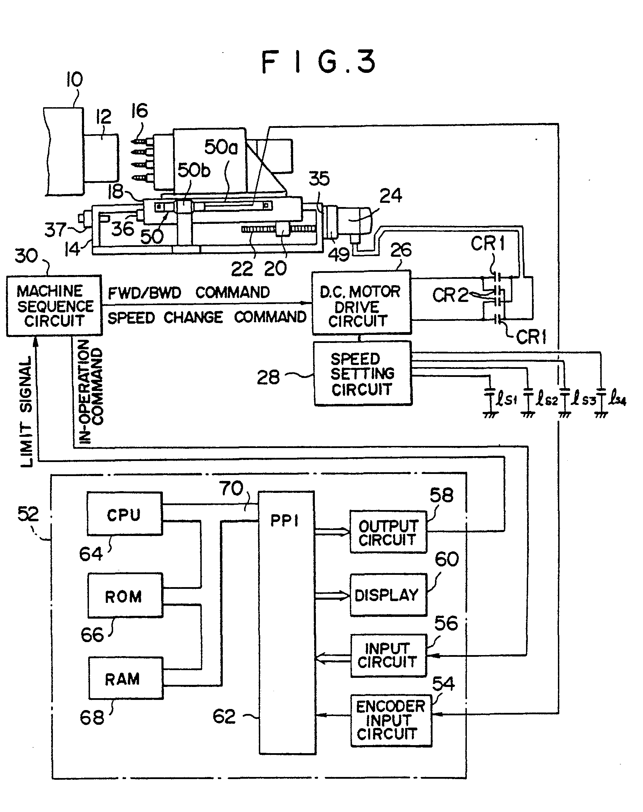

In the following description, the present invention is applied to a machine tool. As shown in Fig. 3, the machine tool includes a linear encoder 50, instead of the dogs and the limit switches, which serves as a pulse generator for converting a unit amount of movement of the slide table 18 to a pulse signal and a limit detector 52 which responses to the output of the linear encoder 50 to detect the feed position of the slide table 18 and provide a limit signal to the machine sequence circuit 30. The other parts of the machine tool are identical to those of the prior art machine tool shown in Fig. 1 and designated by the like reference numerals. They are not explained here.

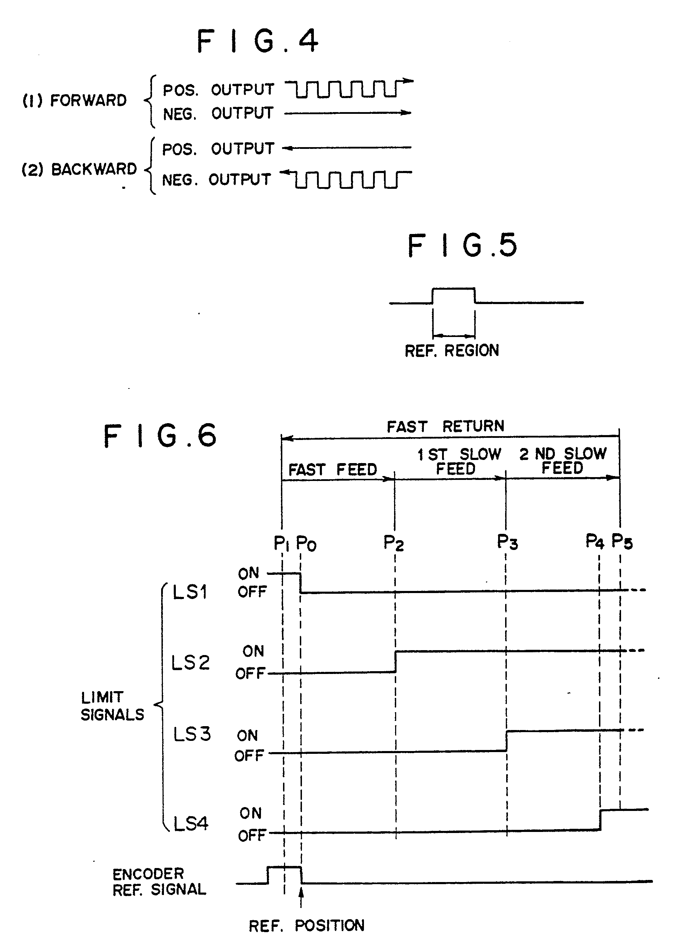

The linear encoder 50 is disclosed in Japanese Published Examined Utility Model Application JP—A—55-61421. A magnetic source for generating a reference signal and a magnetic lattice type magnetic source for generating a measuring signal are arranged on a common scale 50a, and a detecting head assembly 50b having a reference detecting magnetic head for detecting the reference signal and a measuring detecting magnetic head is arranged to oppose to the scale 50a. By relatively moving the scale 50a and the detecting head assembly 50b, pulse signals are produced. In the present embodiment, the scale 50a is fixed to the side of the slide table 18 and the detecting head assembly 50b is fixed to the slide base 14 to oppose to the scale 50a. As the slide table 18 is moved, a pulse signal is produced for each unit amount of movement of the slide table 18, so that the amount of movement of the slide table 18 is converted to pulse signals. In order to determine whether the slide table 18 was moved forward or backward, a positive pulse signal is produced, as shown in Fig. 4 (1), when the slide table 18 is moved forward and a negative pulse signal is produced, as shown in Fig. 4 (2), when it is moved backward. When the slide table 18 is moved into a reference region, that is, when the detecting head assembly reaches the reference signal magnetic source, a reference signal which is a square wave pulse signal as shown in Fig. 5, is produced. Those pulse signals and the reference signal are applied to the limit detector 52. The limit detector 52 comprises an encoder input circuit 54, and input circuit 56 to which an in-operation command from the output of the machine sequence circuit 30 is applied, an output circuit 58 for producing a limit signal to the machine sequence circuit 30, a display 60 for displaying abnormal state, a programmable peripheral interface (PPI) 62, a central processing unit (CPU) 64, a read-only memory (ROM) 66, a random access memory (RAM) 68 and buses 70 for interconnecting those units. A preset number $p_0$ corresponding to a switching point $P_0$ of control and preset numbers $p_1 \sim p_5$ corresponding to predetermined points of the moving body are written and stored in the RAM 68 of the limit detector 52 by a separately prepared program module. Those preset numbers are determined by selecting one of the predetermined positions of the moving body in the reference region as the reference position, converting distances from the reference position to other predetermined positions to the corresponding numbers of pulses and adding or subtracting those numbers of pulses to or from the number (reference number) for the reference position.

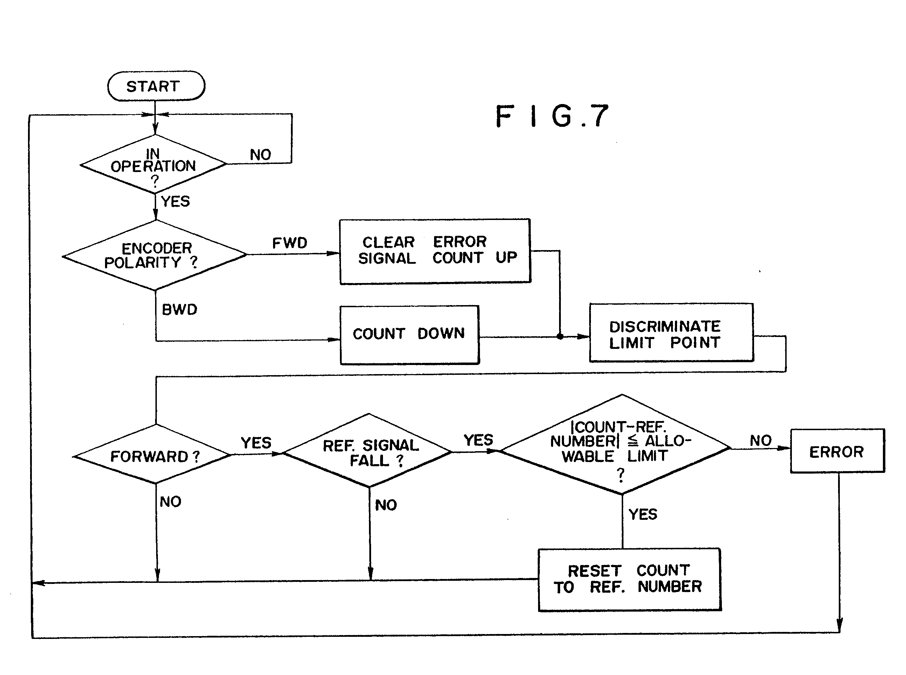

The operation is now explained with reference to Figs. 6 and 7.

3

The D.C. motor 24 drives the feed shaft 22 through a gear coupling 49 to advance or retract the slide table 18 to which the feed nut 20 is fixed. As shown in Fig. 6, the feed of the slide table 18 is controlled by limit signals LS1 LS4 produced by the limit detector 52 such that it is fed fast from point $P_1$ to point $P_2$, fed slowly (first slow feed) from point $P_2$ to point $P_3$, fed slowly (second slow feed) from point $P_3$ to point $P_5$ and finally fed backward fast from point $P_5$ to point $P_1$. These feed speeds are preset in the speed setting circuit 28 and one of the speeds is selected by speed switching contacts $ls_1 \sim ls_4$ which are switched by relays in the machine sequence circuit 30.

As the feed shaft 22 is rotated by the D.C. motor 24, the slide table 18 is moved and the linear encoder 50 produces pulse signals, as shown in Fig. 4, of positive or negative polarity depending on the direction of movement. These pulse signals are applied to the encoder input circuit 54 of the limit detector 52.

As shown in Fig. 7, the limit detector 52 receives at the input circuit 56 the in-operation command signal from the machine sequence circuit 30. When the machine is not in operation, the in-operation command signal assumes a rest state. When the output from the machine sequence circuit 30 indicates the in-operation state, the polarity of the pulse signals from the linear encoder 50 is checked to determine if the direction of the movement is forward (positive pulse signal) or backward (negative pulse signal). When the slide table 18 is moving forward, an error output (to be described later) of the limit detector 52 is cleared and the pulse signals from the output of the linear encoder 50 are counted up by a counter. On the other hand, when the slide table 18 is moving backward, the number of pulses from the output of the linear encoder 50 generated as the slide table 18 moves backward is counted down from the content of the counter. When the count reaches the preset numbers $p_0$ or $p_1 \sim p_5$ corresponding to the predetermined limit points, a limit signal corresponding to the count is produced.

When the slide table 18 reaches a position in the reference region, for example, the original position $P_1$ of the slide table 18, the reference signal shown in Fig. 5 is applied to the limit detector 52, and the positive pulse indicating the forward movement of the slide table 18 is produced. A difference between the content of the counter at the moment of the fall of the reference signal by the function of the reference point setter and the preset number (reference number) corresponding to the predetermined reference position is produced. If the absolute value of the difference is within an allowable range, the content of the counter is reset to the reference number. If the difference is too large, it is determined that the count of the counter does not reflect the actual position of the slide table 18 by an error in either the mechanical system or the electrical system and an error state is displayed on the display 60, and an error signal is produced to the machine sequence circuit 30 to stop the machining operation.

The amount of movement of the slide table 18 is determined by setting the position corresponding to the fall point of the reference signal generated in the forward movement as the reference position, and counting up or down the positive or negative pulse signals generated by the linear encoder 50 as the slide table 18 is moved forward or backward, with respect to the reference number corresponding to the reference position, so that the position of the slide table 18 and the count of the counter have one-to-one correspondence.

The CPU 64 compares the count of the counter with the preset numbers $p_0 \sim p_5$ corresponding to the predetermined positions $P_0 \sim P_5$ stored in the RAM 68, and when it detects a compare equal condition, it changes the on-off states of the limit signals LS1 $\sim$ LS4 and supplies them to the output circuit 58 through the PPI 62. As a result, the machine sequence circuit 30 is controlled in accordance with the position of the slide table 18.

As the machining process to the workpiece 12 proceeds and the stopper 36 on the slide table 18 reaches the advance end prediction position $P_4$ preset near the dead stopper 37 which is fixed to the end of the slide base 14, the speed switching contact $ls_4$ is closed to activate an advance end confirmation timer (not shown) having a time-out period long enough to allow the slide table 18 to abut against and press the dead stopper 37. As a result a current limit circuit is activated by the machine sequence circuit 30. The slide table 18 continues the forward movement and when it approaches the advance end position $P_5$, it abuts against and pushes the dead stopper 37. Since the current limit circuit prevents a current higher than a predetermined limit from flowing to the D.C. Motor 24, the current is maintained at a stable constant level by the speed feedback circuit of the D.C. motor 24. Thus, the slide table 18 is pushed to the advance end position by a constant torque so that a very high positioning accuracy is attained.

If the difference between the advance end preset number $p_5$ and the count on the counter corresponding to the position at which the slide table 18 abuts against the dead stopper 37 is larger than the allowable limit, it is determined that a significant error has occurred and an error signal may be produced to stop the movement of the slide table 18.

When the advance end confirmation timer is timed out, the machine sequence circuit 30 issues a fast return command so that the slide table 18 moves away from the dead stopper 37 and returns to the original position $P_1$. When the slide table 18 retracts to the original position $P_1$, the limit signal LS1 is produced and the machine sequence circuit 30 issues a stop command to the D.C. motor 24 to stop the movement of the slide table 18.

Since the slide table 18 is returned at the high speed, it does not stop at the original position $P_1$

by inertia and overruns beyond the original position $P_1$. However, as described above, during the backward movement or the retract movement, the counter is not reset to the reference number even if the linear encoder 50 produces the reference signal but continues the count-down operation. Thus, when the slide table 18 actually stops, the count of the counter is smaller than the reference number. In the next machining cycle of the slide table 18, the advance command is issued and the counter counts up the positive pulse signals generated by the linear encoder 50. When the slide table 18 reaches the original position $P_1$, the reference signal is produced. As the slide table 18 further advances, the reference signal falls. At this moment, the count of the counter is reset to the preset reference number. The reference signal instead of the original position $P_1$ may be produced as the limit signal.

The limit signals (control switching signals) can be readily altered by updating thedata (corresponding to the distance from the reference position) stored in the RAM 68 of the limit detector 52 by the separately prepared program module.

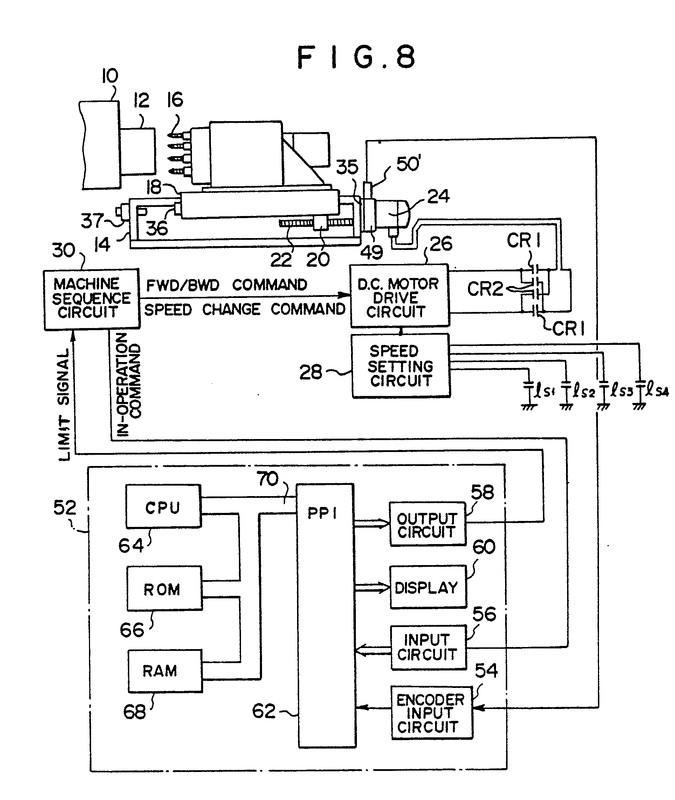

In the illustrated embodiment, the linear encoder 50 produces the positive or negative pulse signals. Alternatively, as shown in Fig. 8, a reference signal output sensor and a rotary encoder 50' integrally mounted to a main shaft of the D.C. motor 24 or a rotary encoder 50' coupled to a drive section extending from an output shaft of the D.C. servo motor 24 to the feed shaft may be provided and two pulse signals having a phase difference of 90 degrees from each other produced by the rotary encoder 50' may be used. Alternatively, a pulse sequence produced by the rotary encoder 50' and the forward and backward signals from the machine sequence circuit 30 may be combined to determine the direction of the movement, or the rotary encoder may produce different pulse signals depending on the forward and backward rotations and they may be combined with a reference sensor separate from the rotary encoder. In this case, the operation of the limit detector is simplified.

In the illustrated embodiment, the limit signals are preset in the machine sequence circuit which comprises the relay sequence circuit. It should be understood that those signals may be preset in a sequencer which has recently been used widely.

While the illustrated embodiment is applied to the machine tool in which the feed of the slide table is controlled by the D.C. motor, the application field of the present invention is not limited to the above but the present invention is equally applicable to a machine tool in which the feed of the slide table is controlled by an oil pressure cylinder or an air pressure cylinder and the feed speed is controlled by changing a flow rate of the oil or air.

## Claims

1. A method for detecting a position of a moving body by converting unit amounts of movement of the moving body directly or indirectly to pulse signals comprising the steps of:

selecting one of a plurality of predetermined positions in a range of movement of said moving body as a reference position;

prestoring a reference number corresponding to said reference position and preset numbers corresponding to the other predetermined positions determined with reference to said reference number;

counting said pulse signals with reference to said reference number from a time point of arrival of said moving body at said reference position; and

comparing the count of said pulse signals with said preset numbers, whereby the arrival of said moving body at said other predetermined positions is detected when a compare equal is detected in the comparison, characterized by the steps of:

checking the difference between said reference number and said count of said pulse signals when said moving body has arrived at said reference position;

resetting said count of said pulse signals to said reference number if said difference is within a predetermined allowable range; and

producing an error signal to display an error condition and stop said moving body if said difference is not within a predetermined allowable range.

2. A method for detecting a position of a moving body according to Claim 1, characterized in that the polarity of said pulse signals is positive or negative depending on whether said moving body is moved forward or backward.

## Patentansprüche

1. Methode zur Ermittlung der Position eines bewegten Elementes durch direktes oder indirektes Umsetzen von Größeneinheiten der Bewegung des bewegten Elementes in Impulssignale, wobei

eine aus einer Vielzahl vorbestimmter Positionen in einem Bewegungsbereich des bewegten Elementes als Bezugsposition gewählt wird,

eine der Bezugsposition entsprechende Bezugszahl und den anderen vorbestimmten Positionen entsprechende, in Bezug auf die Bezugszahl vorgewählte Zahlen voreingespeichert werden,

die Impulssignale in Bezug auf die Bezugszahl von einem Zeitpunkt der Ankunft des bewegten Elementes an der Bezugsposition an gezählt werden und

der Zählstand der Impulssignale mit den vorgewählten Zahlen verglichen wird, wodurch die Ankunft des bewegten Elementes an den anderen vorbestimmten Positionen erfaßt wird, wenn bei dem Vergleich die Gleichheit ermittelt wird, dadurch gekennzeichnet,

daß die Differenz zwischen der Bezugszahl und dem Zählstand der Impulssignale geprüft wird, wenn das bewegte Element an der Bezugsposition angekommen ist,

daß der Zählstand der Impulssignale auf die Bezugszahl zurückgestellt wird, falls die Differenz innerhalb eines vorbestimmten Toleranzbereich liegt, und

daß eine Fehlersignal zum Anzeigen eines Fehlerzustands und Anhalten des bewegten Elementes erzeugt wird, falls die Differenz nicht innerhalb eines vorbestimmten Toleranzbereichs liegt.

2. Verfahren zur Ermittlung der Position eines bewegten Elementes nach Anspruch 1, dadurch gekennzeichnet, daß in Abhängigkeit davon, ob sich das bewegte Element vorwärts oder rückwärts bewegt, die Polarität der Impulssignale positiv oder negativ ist.

**Revendications**

1. Une procédé de détection de la position d'un corps mobile en convertissant des quantités de déplacement unité du corps mobile, directement ou indirectement en signaux d'impulsion, et comportant les étapes consistant à:

— sélectionner l'une, parmi une pluralité de positions prédéterminées, dans une gamme de déplacements dudit corps mobile comme position de référence;

— stocker préalablement d'un nombre de référence correspondant à ladite position de référence et de nombres présélectionnés correspondant aux autres positions prédéterminées, elles-mêmes déterminées en référence audit nombre de référence;

— compter lesdits signaux d'impulsions en référence audit nombre de référence à partir d'un point d'arrivée temporel dudit corps mobile à ladite position de référence; et

— comparer le comptage desdits signaux d'impulsion avec lesdits nombres présélectionnés, l'arrivée dudit corps mobile auxdites autres positions prédéterminées étant détectée lorsque l'on détecte, dans la comparaison, une égalité, caractérisé par les étapes consistant à:

— contrôler la différence entre ledit nombre de référence et ledit comptage desdits signaux d'impulsion lorsque ledit corps mobile a atteint ladite position de référence;

— remettre en position ledit comptage desdits signaux d'impulsion auxdit nombre de référence si ladite différence est à l'intérieur d'une gamme prédéterminée admissible; et

— émettre un signal d'erreur pour afficher une condition d'erreur et arrêter ledit corps mobile si ladite différence n'est pas à l'intérieur d'une gamme admissible prédéterminée.

2. Un procédé pour détecter la position d'un corps mobile selon la revendication 1, caractérisé en ce que la polarité desdits signaux d'impulsion est positive ou négative selon que ledit corps mobile est déplacé vers l'avant ou vers l'arrière.

# F I G. I

MACHINE SEQUENCE CIRCUIT

D.C. MOTOR DRIVE CIRCUIT

SPEED SETTING CIRCUIT

CR1

CR2

CR1

$\ell_{S1}$ $\ell_{S2}$ $\ell_{S3}$ $\ell_{S4}$

# F I G. 2

D-A CONVERTER

SERVO AMP

SERVO MOTOR

COMMAND PULSES

UP-DOWN COUNTER

MOVING BODY

PULSE SIGNALS

PULSE GENERATOR

# F I G . 3

MACHINE SEQUENCE CIRCUIT

FWD/BWD COMMAND

SPEED CHANGE COMMAND

D.C. MOTOR DRIVE CIRCUIT

SPEED SETTING CIRCUIT

LIMIT SIGNAL

IN-OPERATION COMMAND

CPU

ROM

RAM

PPI

OUTPUT CIRCUIT

DISPLAY

INPUT CIRCUIT

ENCODER INPUT CIRCUIT

# F I G . 4

(1) FORWARD { POS. OUTPUT

NEG. OUTPUT

(2) BACKWARD { POS. OUTPUT

NEG. OUTPUT

# F I G .5

REF. REGION

# F I G .6

FAST RETURN

FAST FEED

1ST SLOW FEED

2 ND SLOW FEED

$P_1$ $P_0$    $P_2$    $P_3$    $P_4$ $P_5$

LS1   ON OFF

LS2   ON OFF

LIMIT SIGNALS

LS3   ON OFF

LS4   ON OFF

ENCODER REF. SIGNAL

REF. POSITION

3

F I G . 7

0 063 466

# F I G . 8